# EUROPEAN PATENT SPECIFICATION

(11) **EP 3 242 062 B1**
(45) Date of publication and mention of the grant of the patent: **01.09.2021**
(21) Application number: 17166240.6
(22) Date of filing: 12.04.2017
(51) Int. Cl.: F16K 1/00, B67D 7/04, B67D 7/32, B67D 7/36, B67D 7/78

(54) **ANTI-SYPHON VALVE FOR CONTROLLING THE FLOW OF FLUID THROUGH A CONDUIT**
ANTI-SIPHON-VENTIL ZUR REGELUNG DES DURCHFLUSSES EINES FLUIDS DURCH EINE LEITUNG
SOUPAPE ANTI-SYPHON POUR RÉGULER L'ÉCOULEMENT DE FLUIDE À TRAVERS UN CONDUIT

(30) Priority: 12.04.2016 GB 201606281
(43) Date of publication of application: 08.11.2017
(73) Proprietor: Risbridger Ltd, Redhill, Surrey RH1 2LH (GB)
(72) Inventor: Eden, Graham Mansfield Stuart, Tirau 3410 (NZ)
(74) Representative: Cameron, Stewart

(56) References cited:
- EP-A1- 2 818 651
- BE-A- 639 284
- CN-B- 102 192 332
- US-A1- 2014 110 436

## Description

The present invention relates to an apparatus for controlling the flow of fluid through a conduit. Particularly, though not exclusively, the present invention relates to a valve such as an anti-syphon valve.

Anti-syphon valves are used in conjunction with fuel or chemical dispensing systems, in which a dispenser draws fluid from an above ground storage tank. Anti-syphon valves are a safety requirement when the elevation of piping that transfers the fluid to the dispenser, drops below the level of fluid in the storage tank. The valves are installed between the storage tank and the dispenser in order to prevent fluid emptying from the storage tank in the event of a leak in the piping or dispenser unit.

There are three main types of conventional anti-syphon valves: spring loaded valves; solenoid valves; and diaphragm valves.

Spring loaded anti-syphon valves are non-return valves held in a closed position by a spring calibrated to overcome the maximum system head pressure. Opening of such spring loaded valves places a high vacuum load on the suction pump. As a result, the use of such spring loaded valves is typically restricted to small capacity and/or low-height tanks.

Solenoid anti-syphon valves are operated by an electrical control signal from the dispenser. This type of solenoid valve is relatively expensive and needs additional certification due to the use of electrical signals in a typically flammable or explosive environment.

Diaphragm anti-syphon valves are available as in-line valves operated by a vacuum pressure from a suction dispenser pump. Diaphragm valves are sensitive to flow rate variations and can suffer from 'hunting' modulation problems where the valve rapidly shuttles between open and closed positions.

The present invention aims to overcome at least some of the aforementioned disadvantages associated with conventional anti-syphon valves. The present invention aims to perform the primary function of an anti-syphon valve by providing positive shutoff sealing to substantially restrict syphoning in the event of a loss of integrity in the pipework or dispenser. In addition, the present invention aims to provide stable opening and operation while dispensing fuel or chemicals.

According to the present invention there is provided an anti-syphon valve according to claim 1.

Optionally, the inlet has an associated axis and the outlet has an associated axis. The axes of the inlet and the outlet may be misaligned. The axes of the inlet and the outlet may be arranged at an angle relative to one another. The axes of the inlet and the outlet may be substantially perpendicular to one another.

The apparatus may be configured such that, in use, the direction of fluid flow changes between the inlet and the outlet when the valve member is in the second configuration.

The apparatus may be configured to alter the direction of fluid flow, in use, by around 60 to 120 degrees. The apparatus may be configured to change the direction of fluid flow, in use, between around 80 to 100 degrees. The apparatus may be configured to change the direction of fluid flow, in use, by approximately 90 degrees.

The apparatus may act as an elbow joint.

The valve member is movable between the first configuration and the second configuration in response to a predetermined force.

The first configuration is a closed configuration. The second configuration may be an open configuration.

The valve member may be retained in the first configuration. The valve member may be biased in the first configuration. The valve member may be biased in the first configuration with a known force. The valve member may be held in the first configuration with a pre-calibrated force.

The valve member may be biased in the first configuration by a resilient means. The resilient means may include a spring. The resilient means may comprise a compression spring. The resilient means may comprise a coil spring.

The valve member may be biased in the first configuration by a pressure differential.

The apparatus may be configured such that the valve member is held in a normally closed position.

At least one of the inlet and the outlet may be connectable to an actuator to actuate movement of the valve member between the first and second configurations. At least one of the inlet and the outlet may be connectable to an actuator to alter a pressure differential within the apparatus and thereby actuate movement of the valve member between the first and second configurations.

The actuator may alter the pressure differential relative to atmospheric pressure to actuate movement of the valve member. The actuator may alter the pressure differential across the valve member to actuate movement of the valve member. The actuator may be a pump.

At least one of the inlet and the outlet may be connectable to a pump. The outlet may be connectable to a pump. The pump may be a suction pump.

The stabiliser may act to stabilise movement of the valve member between the first and second configurations. The stabiliser may act to stabilise movement of the valve member between the first and second configurations following application of a predetermined force.

The stabiliser is configured to allow gradual movement of the valve member between the first and second configurations. The stabiliser may act to slow movement of the valve member between the first and second configurations following application of a predetermined force.

The stabiliser is configured to allow gradual movement of the valve member in the second configuration. The stabiliser may be configured to allow gradual movement of the valve member in the second configuration from an initial open to a fully open position of the valve member. Thus, the stabiliser allows gradual opening of the valve member in the second configuration once fluid flow in permitted through the apparatus in use.

The stabiliser may be configured to control the flow area past the valve member in the second configuration. The stabiliser may be configured to control the flow area past the valve member between an initial open and a fully open position in the second configuration.

The stabiliser may comprise a flow control member to control the flow area past the valve member in the second configuration. The stabiliser may comprise a flow control member to restrict the flow area within the apparatus past the valve member in the second configuration. The stabiliser may comprise a flow control member to restrict the flow area past the valve member in an initial open position in the second configuration.

The stabiliser may comprise a flow control member to vary the flow area past the valve member between an initial open and a fully open position in the second configuration.

At least a portion of the flow control member may be integral with the valve member.

The body of the apparatus may comprise a bore extending between the inlet and the outlet and at least a portion of the flow control member may be formed within the bore.

The flow control member may comprise at least one of: a shaped valve member; and a portion of profiled inner surface proximate the valve member, to initially restrict flow area.

The flow control member may comprise at least one of: a shaped valve member; and a portion of profiled inner surface proximate the valve member, to gradually increase flow area as the valve member moves between an initial open and a fully open position in the second configuration.

The flow control member may comprise at least one of: a gradually tapered valve member; and a portion of an inner surface of the body formed with a complementary profile.

The shaped or gradually tapered valve member and profiled inner surface of the apparatus may control initial flow area when the valve is opening. These complementary tapers or profiles may be used to restrict the flow area initially before allowing a gradual increase in flow area. The described arrangement may provide a progressive flow area opening.

Alternatively, or additionally, the stabiliser may comprise a damper to stabilise movement of the valve member.

The damper may damp, restrict or slow movement of the valve member on application of the predetermined force such that the transition from the first to the second configurations and the subsequent progressive opening of the valve member in the second configuration is a controlled process.

The stabiliser may include a hydraulic damper to stabilise movement of the valve member.

The damper may act to damp or slow movement of the valve member. The damper may be arranged to act on the valve member to stabilise movement of the valve member.

The damper may be a bidirectional or two-way damper.

The damper may be located in a sealed chamber surrounding the valve member and the damper may be arranged to act on the valve member. The damper may be located in a sealed chamber surrounding the valve member and the chamber may be filled with fluid.

The sealed chamber surrounding the valve member may house the resilient means.

Thus, the stabiliser may include a flow control member and/or a damper. These features incorporated either alone or in conjunction with one another, improve performance of the apparatus by stabilising movement of the valve member and restricting rapid reciprocal movement of the valve member between the first and second configurations.

The valve member is movable by a flexible membrane. The valve member is coupled to a flexible membrane.

The flexible membrane is moveable in response to a pressure differential. The flexible membrane may be a diaphragm. The flexible membrane may be located between the outlet and the valve member.

The flexible membrane may be moveable in response to a pressure differential on an outlet side of the valve member. The flexible membrane may be moveable in response to a pressure on the outlet side of the valve member that is lower than an ambient pressure. The flexible membrane may be moveable in response to a pressure on the outlet side of the valve member that is lower than a pressure on an inlet side of the valve member.

The apparatus may further comprise a protector to protect the flexible membrane. The protector may be located adjacent the flexible membrane. One side of the flexible membrane may be coupled to the valve member and another side of the flexible membrane may be located alongside at least a portion of the protector.

The protector may be a cap, cover or plate. The protector may be an end cap.

At least one spacer may be located between the protector and the flexible membrane. The at least one spacer may be located between the protector and the flexible membrane to substantially restrict sticking between the protector and the flexible membrane. A plurality of spacers may be located between the protector and the flexible membrane.

The at least one spacer may comprise a profiled portion. The at least one spacer may comprise a rib. The rib may have a thickness greater than the surrounding material. The rib may be a raised circular portion. The spacer may comprise a plurality of circular ribs, wherein each rib has a thickness greater than that of the surrounding material.

The at least one spacer may be formed on a surface of the protector adjacent the flexible membrane. The at least one spacer may be integrally formed on a surface of the protector adjacent the flexible membrane. The at least one spacer may be integrally moulded on a surface of the protector.

The spacer may include a plurality of ribs integrally formed on an inner surface of the protector adjacent the diaphragm to substantially restrict sticking between the diaphragm and the protector. This enables the apparatus to be used in an inverted position where the valve member is subject to a pressure differential that urges the coupled diaphragm towards and into contact with the protector.

At least one of the inlet and the outlet may be configured for connection with an adjacent conduit. At least one of the inlet and the outlet may be formed to match an adjacent conduit. A diameter of at least one of the inlet and the outlet may be sized to match an adjacent conduit. At least one of the inlet and the outlet may have an end connector arranged to connect with an adjacent conduit. The adjacent conduit may have a standard diameter and a standard end connector for a particular application.

At least one of the inlet and the outlet may include an adjustable connector to enable alignment with an adjacent conduit. At least one of the inlet and the outlet may include a connector that is adjustable to vary the position of an opening in the region of the inlet and/or the outlet to enable alignment with an adjacent conduit. At least one of the inlet and the outlet may comprise a swivel flange.

The inlet may be connectable to a fluid storage facility. The inlet may be connectable to a fluid storage facility by one or more conduits. The conduits may include rigid piping, hose, and/or joints. The fluid storage facility may include a storage tank such as an above ground storage tank. The storage tank may be a repository for fluids including but not limited to fuel or chemicals.

The outlet may be connectable to a fluid dispenser. The outlet may be connectable to a fluid dispenser by one or more conduits. The conduits may include rigid piping, hose, and/or joints. The fluid dispenser may be operable by an end user. The fluid dispenser may be operable to dispense fluid when operated by an end user.

The apparatus is an anti-syphon valve.

The apparatus may be configured to selectively transmit fluid between the inlet and the outlet in the second configuration. The apparatus may be configured to selectively transmit fuel and/or chemicals between the inlet and the outlet.

The valve member may be a poppet valve. The valve member may comprise a head and a stem. The valve member may comprise an integral head and stem. The valve member may comprise a head having a diameter that gradually tapers to a stem having a smaller diameter.

The body of the apparatus may have a bore extending between the inlet and the outlet and the valve member may obstruct the bore in the first configuration. At least a portion of the bore may have a profiled surface and/or a shoulder to form a seat for the valve member. The valve member may be arranged to seal against at least a portion of the seat formed in the bore.

At least a portion of the bore has a profiled surface matching at least a portion of the valve member to form a tapered portion complementary with a portion of the valve member.

The apparatus may be configured for subterranean use.

The body of the apparatus may be made from a material having a substantially high corrosion resistance. The body of the apparatus may be constructed from a material having a substantially low porosity. The body of the apparatus may be made from machined metal. The body of the apparatus may be machined from extruded metal. The body of the apparatus may have an anodized surface.

A computer-readable medium may have computer-executable instructions adapted to cause a three-dimensional printer to print an apparatus described according to the first aspect of the invention.

According to an embodiment of the invention, there is provided a system for dispensing fluid from a fluid storage facility, the system comprising:
a fluid storage facility;
an actuator for dispensing fluid; and
an apparatus according to the invention,
wherein the actuator is arranged to cause selective movement of the valve member of the apparatus between the first and second configurations.

A kit of parts may form an apparatus according to the invention.

Further features and advantages of the present invention will become apparent from the claims and the following description.

Embodiments of the present invention will now be described by way of example only, with reference to the following diagrams, in which:-
Figure 1 is a schematic diagram of a system according to one embodiment of the invention;
Figure 2 is a sectional view of apparatus in a first closed configuration according to one embodiment of the invention; and
Figure 3 is a sectional perspective view of the apparatus of Figure 2 in a second open configuration;
Figure 4 is a schematic diagram of an alternative arrangement of a system according to a second embodiment of the invention; and
Figure 5 is a schematic diagram of an alternative arrangement of a system according to a third embodiment of the invention.

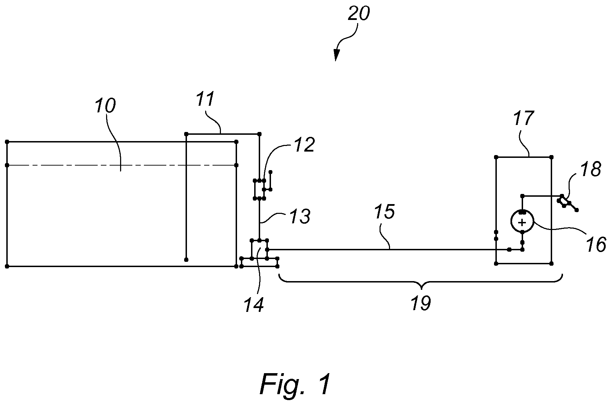

A fuel dispensing system is shown generally at 20 in Figure 1. The fuel dispensing system 20 includes an above ground storage tank 10 selectively fluidly connected to a dispenser 18 housed in a dispensing unit 17. The storage tank 10 is a repository for fuel. Rigid pipe 11 extends within the storage tank 10 and provides a fluid communication line between the storage tank 10 and an isolation valve 12. Rigid pipe 13 alongside an external surface of the tank 10 fluidly connects the isolation valve 12 with an apparatus according to one embodiment of the invention in the form of an anti-syphon valve 14. The anti-syphon valve 14 is mounted towards the base and alongside the exterior of the storage tank 10. Rigid pipe 15 provides a fluid conduit between the anti-syphon valve 14 and the dispenser unit 17. The anti-syphon valve 14 is positioned between and joins the rigid pipe 13 with the rigid pipe 15. Thus, the anti-syphon valve 14 may be used to join adjacent pipe 13, 15 in place of an elbow joint.

An actuator in the form of a suction pump 16 is provided in the dispenser unit 17. The suction pump 16 can be activated by the dispenser 18. The dispenser 18 is accessible and operable by an end user (not shown). On actuation, the suction pump 16 is capable of reducing pressure in the pipe 15 and on an outlet side of the anti-syphon valve 14.

The isolation valve 12 and an anti-syphon valve 14 are mandatory safety features of many chemical and fuel dispensing systems 20. Mounting the anti-syphon valve 14 at the base of the storage tank 10 provides a leak protection zone generally indicated at 19 which extends between the valve 14 at the base of the tank 10 and the dispenser 18. The leak protection zone 19 is extensive compared with conventional systems, which require diaphragm valves to be located close to the dispenser unit 17 to account for problems associated with pressure drop through the valve. The extensive leak protection zone 19 that covers both the dispenser unit 17 and the rigid pipe 15 between the unit 17 and the base of the tank 10 is an improved safety feature of the present invention.

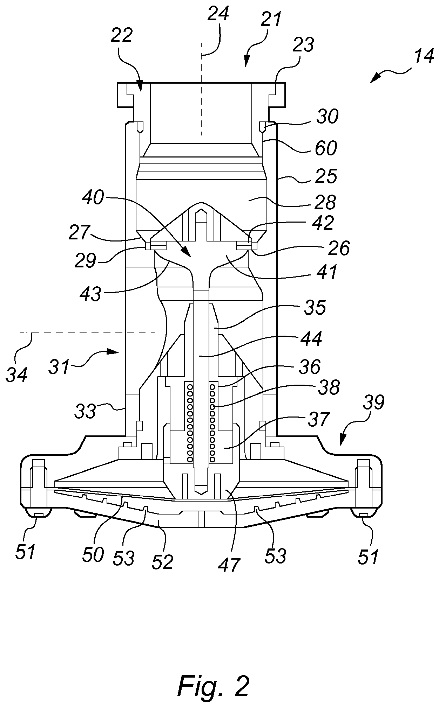

The anti-syphon valve 14 is shown in more detail in Figure 2. The anti-syphon valve 14 has a valve body 25 with a bore 28 extending therethrough. The valve body 25 is manufactured from a bar stock extruded section with an anodised surface finish and the bore 28 is machined therein. This method of construction results in the valve body 25 having low porosity and good corrosion resistance when compared with sand or die cast valve bodies. The construction and treatment of the valve body 25 improves integrity of the anti-syphon valve 14 in typical operating conditions where the valve 14 is subject to thermal cycles and exposed to varying atmospheric conditions in outdoor applications. Improved integrity of the valve 14 has significant safety and environmental advantages, since the anti-syphon valve 14 acts as a critical safety device.

The bore 28 extends through the valve body 25 and between two openings in the form of an inlet 21 and an outlet 31. The inlet 21 has an associated axis 24. A swivel connector 22 and a flange 23 are provided in the region of the inlet 21 for connection to a lower end (in use) of the pipe 13. The swivel connector 22 allows for connection between the pipe 13 and the inlet 21 in the event of axial misalignment between the rigid pipe 13 and the inlet 22. Thus, the swivel connector 22 is advantageous since it can account for variations in the planned instalment of the pipework to allow a degree of angular alignment of the inlet axis 24 of the anti-syphon valve 14 with the rigid pipe 13.

The inlet 21 has a 2 inch (approximately 5.1 cm) diameter to match the diameter of the rigid pipe 13. The flange 23 has a four bolt connection to a matching flange (not shown) provided on the pipe 13. This four bolt flange 23, and 2 inch (approximately 5.1 cm) diameter swivel connector 22 is advantageous since it maximises flow from the rigid pipe 13 into the valve 14 inlet 21 and does not require any reducer fittings.

The outlet 31 is machined in a sidewall of the valve body 25 such that an axis 34 of the outlet 31 is substantially perpendicular to the axis 24 of the inlet 21. The perpendicular axes 24, 34 of the inlet 21 and the outlet 31 respectively, change the direction of fluid flow through the valve body 25 by 90 degrees in use. This right angle layout of the valve body 25 compared with a conventional in-line configuration reduces the pressure drop between the valve inlet 21 and outlet 31. A further advantage of the anti-syphon valve 14 right angle arrangement between the inlet 21 and the outlet 31 is that the valve 14 can be mounted directly at the base of the storage tank 10 as shown in Figure 1 of the present embodiment in place of a 90 degree pipe elbow joint, further reducing pressure drop within the pipework 15 and decreasing installation time and cost.

The outlet 31 has a four-bolt, 2 inch (approximately 5.1 cm) PECAT® connector 33 to match a connector (not shown) on the adjacent rigid pipe 15. The complementary connector 33 maximises flow area and simplifies installation of the anti-syphon valve 14.

Within the valve body 25, a portion of the bore 28 is machined to form a profiled surface 27. The profiled surface 27 includes a gradually tapered portion 29 that leads to shoulder stepping from a larger to a smaller diameter to form a valve seat 26.

A valve member in the form of a valve poppet 40 is movably located within the bore 28 of the valve body 25. The valve poppet 40 has a head 41. An underside of the head 41 carries an o-ring seal 42 that contacts the valve seat 26 of the profiled inner surface 27 of the valve 14 to form a seal in a first closed configuration. The head 41 of the poppet valve 40 has a gradual taper 43 to a stem 44 of a smaller diameter. The profile of the gradual taper 43 on the underside of the poppet valve 40 matches part of the tapered portion 29 provided on the profiled inner surface 27 of the bore 28. In use, as described hereinafter, the tapered portions 43, 29 co-act with one another as a stabiliser in the form of a flow controller to stabilise opening of the valve 14.

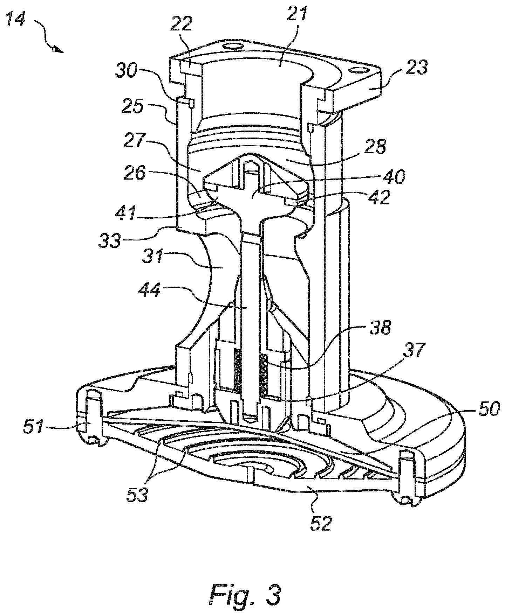

At an end of the valve stem 44 opposing the head 41, the valve poppet 40 is secured to a coupling 47 by a sealed threaded connection. The coupling 47 connects the end of the valve stem 44 to a flexible membrane in the form of a diaphragm 50. The diaphragm 50 and a protector in the form of a cap or cover plate 52 are fixed to a lower end 39 of the valve body 25 by bolts 51. The cap 52 has a plurality of moulded circular ribs 53 (shown in Figure 3) on its inner surface so that the ribs 53 are located between the cover plate 52 and the diaphragm 50. The ribs 53 are provided to substantially restrict sticking together of the diaphragm 50 and the cover plate 52 especially in view of the inverted position of the diaphragm 50 in the present embodiment with the effect of fuel hydrostatic head pressure acting on the valve poppet 40 and in turn on the diaphragm 50.

The stem 44 of the valve poppet 40 is slideable within a shaft 35. The shaft 35 is fixed within the valve body 25. An exterior of the shaft 35 has a centrally positioned shoulder 36 that retains a first end of a biasing means in the form of a compression spring 38. A second end of the compression spring 38 acts against the coupling 47 and hence the diaphragm 50 to urge the diaphragm 50 against the cover plate 52 and thus retain the poppet valve 40 in the first closed configuration. As a result, the poppet valve 40 is normally biased in a closed position with the seal 42 located against the seat 26 by a pre-calibrated spring 38 force.

The coupling 47 has an upper end that is slideable over part of an outer surface of the shaft 35. A chamber 37 is defined by an end of the shaft 35 and an inner surface of the coupling 47. The chamber 37 holds a stabiliser in the form of a hydraulic damper. The spring 38 is located within the chamber 37.

Prior to use, the fuel dispensing system 20 is installed as shown schematically in Figure 1. During installation, a degree of misalignment of the rigid pipe 13 can be compensated by the swivel connector 22 at the inlet 21 of the anti-syphon valve 14. The installation is quicker compared with prior art fuel dispensing systems, since the system 20 of the invention replaces one right angle elbow joint with the anti-syphon valve such that there is one less component to install and leak test.

Once the fuel dispensing system 20 has been installed and verified, the system 20 is ready for use. The anti-syphon valve 14 is held in the first closed configuration by the spring 38 acting on the coupling 47 in order to close the attached valve poppet 40.

The storage tank 10 is filled with fuel. The hydrostatic head of fuel within the tank causes a pressure differential across the seal 42 of the valve poppet 40 such that the head 41 of anti-syphon valve 14 is urged against the valve seat 26. The spring 38 force and pressure differential seals the valve 14 in the first closed configuration and provides positive closure to restrict any leaks downstream of the anti-syphon valve 14. In this first closed configuration (shown in Figure 2), the valve 14 confers protection against a loss of integrity in the system 20 at any point within the leak protection zone 19.

When an operator (not shown) wishes to dispense fuel, the operator activates the dispenser 18. The activated dispenser 18 causes actuation of the suction pump 16 to reduce pressure in the rigid pipe 15 and within the anti-syphon valve 14 between the seal 42 of the valve poppet 40 and the outlet 31. This reduction in pressure acts to flex the diaphragm 50 inwardly against the bias of the spring 38. Inward movement of the diaphragm 50 causes corresponding upward movement of the coupling 47 and the poppet valve 40. The seal 42 on the head 41 of the poppet valve 40 is lifted off the valve seat 26 to open the valve poppet 40 and allow fluid communication through the anti-syphon valve 14 in the second configuration. Opening of the valve poppet 40 is controlled and slowed by the hydraulic damper chamber 37 acting as a stabiliser. Once the valve poppet 40 is lifted off the seat 26, the valve poppet 40 is in an initial open position. The 'open' area is defined between the taper 43 of the valve poppet 40 and the matching tapered surface 29 in the bore 28. As the valve poppet 40 continues to move upwardly in the second configuration, the matching tapers 43, 29 allow a progressive increase in 'open' area. This allows a gradual opening of the valve poppet 40 from an initial open position to a fully open position (as seen in Figure 3).

The ribs 53 space the diaphragm 50 from the cover plate 52 such that there is no sticking of these components to act as an impediment to upward movement of the diaphragm 50 and hence opening of the valve 14.

Following the opening of the valve 14, the two-way hydraulic damper in the chamber 37 restricts rapid regressive movement of the valve poppet 40 in response to the normal fluctuations in pressure differential around valve 14 opening. The stabilisers in the form of the flow controller and hydraulic damper act to limit rapid movement of the valve poppet 40 and promote stable opening and fluid flow. The stabilisers thereby restrict instability and rapid open/close cycles, known as 'hunting', that are associated with conventional diaphragm valves.

When the operator is no longer using the dispenser 18, there is no demand from the suction pump 16 and pressure within the system 20 equalises. The spring 39 bias becomes the dominant force acting on the diaphragm 50 and therefore the diaphragm 50 is depressed and moves outwardly. Movement of diaphragm 50 causes a corresponding downward movement of the valve poppet 40 via the attached coupling 47. The seal 42 is once again brought into contact with the valve seat 26 to seal the valve 14 in the first closed configuration and re-establish the leak protection zone 19.

The fuel dispensing system 20 described in the embodiment has several advantages over conventional systems. The system 20 of the invention maximises flow rate since the anti-syphon valve 14 is arranged for use in conjunction with 2 inch (approximately 5.1 centimetre) diameter pipe 11, 13, 15. Therefore the valve 14 allows the dispensing units 17 to be used at full capacity which may be in the region of 180 litres of fuel dispensed per minute.

The anti-syphon valve 14 of the above described embodiment provides stable operation over the full operating range while minimising 'hunting' modulation issues.

Furthermore, the construction of the valve 14 in combination with the fuel resistant seals 42 and precision valve seat 26 improves integrity of the anti-syphon valve 14. The valve 14 has positive shut off sealing in the first configuration to reduce the possibility of a leak and to improve safety.

The anti-syphon valve 14 conforms with the necessary safety codes and compliance for use with chemical or fuels, including, but not limited to, diesel or petrol. The anti-syphon valve 14 meets the standards required by the American Petroleum Institute for Venting Atmospheric and Low-Pressure Storage Tanks.

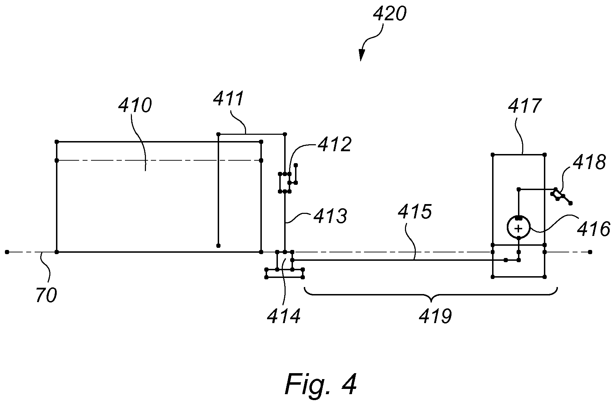

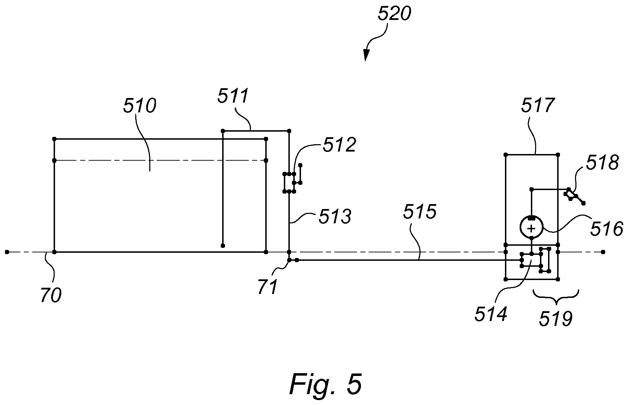

With reference to Figures 4 and 5, further embodiments of a system 420, 520 according to the invention will now be described. In order to minimise repetition, features of the systems shown in Figures 4 and 5 that are similar to features shown in Figure 1 have been numbered with the same two-digit reference differentiated with a third digit, '4' or '5', placed before the common two digits. Such features are structured similarly, operate similarly and/or have similar functions unless otherwise indicated.

The system 420 of Figure 4 includes an anti-syphon valve 414 similar to the anti-syphon valve 14 and as described hereinbefore. The construction and method of manufacture of the anti-syphon valve 414 ensures that the valve 414 has good corrosion resistance and allows subterranean placement and use of the valve 414. As shown in Figure 4, the anti-syphon valve 414 is located alongside and beneath the above ground storage tank 410. Ground level is shown schematically and indicated by the reference numeral 70. The rigid pipe 413 extends below ground level 70 such that the anti-syphon valve 414 is buried. The system shown in Figure 4 has an extensive leak protection zone 419 from the base of the tank 410 to the dispenser 418.

Figure 5 shows another embodiment of the system 520 according to the invention. The anti-syphon valve 14 of Figure 1 has been replaced in the Figure 5 system 520 by an elbow joint 71. The elbow joint 71 joins portions of rigid pipe 513, 515. The anti-syphon valve 514 in the system 520 is located within the base of the dispenser unit 514. Optionally, the anti-syphon valve 514 is positioned below ground level 70 as shown in Figure 5. This alternative system 520 provides a reduced leak protection zone 519. However, the anti-syphon valve 514 remains upstream of the dispenser 518 and the dispenser unit 517, which represent the components most likely to leak or fail during normal use of the system 520.

Although particular embodiments of the invention have been disclosed herein in detail, this is by way of example and for the purposes of illustration only. The aforementioned embodiments are not intended to be limiting with respect to the scope of the statements of invention or appended claims.

It is contemplated by the inventor that various substitutions, alterations, and modifications may be made to the invention without departing from the scope of the invention as defined by the statements of invention or the claims. For example, the valve 14 is described in the context of a fuel dispensing system 20; however, the valve 14 can be used in conjunction with any system where this type of safety valve 14 is desired. The components of the system 20 can be relocated in relation to one another or in an alternative orientation, where appropriate. The shape and form of the ribs 53 can be varied such that a spacer with any shape or design is suitable providing that it substantially restricts sticking between the diaphragm 50 and the cover plate 52. Relative terms such as 'upper' and 'lower' are illustrative only and are not intended to limit the scope of protection conferred.

## Claims

1. An anti-syphon valve (14) for controlling the flow of fluid therethrough, the anti-syphon valve (14) comprising:
a body (25) having an inlet (21) and an outlet (31), and
a valve member (40) retained within the body (25), wherein the valve member (40) is movable between a first configuration in which the valve member (40) substantially prevents fluid communication between the inlet (21) and the outlet (31), and a second configuration in which the valve member (40) permits fluid communication between the inlet (21) and the outlet (31), and
**characterised in that** the valve member (40) is coupled to a flexible membrane (50) that is movable in response to a pressure differential, and wherein the valve member (40) is associated with a stabiliser (43, 29) comprising a flow control member and configured to allow gradual movement of the valve member (40) between the first and second configurations to thereby stabilise movement of the valve member (40).

2. An anti-syphon valve (14) according to claim 1, wherein the inlet (21) has an associated axis (24) and the outlet (31) has an associated axis (34), and wherein the axes (24, 34) of the inlet (21) and the outlet (31) are substantially perpendicular to one another.

3. An anti-syphon valve (14) according to claim 1 or claim 2, wherein the valve member (40) is biased in the first configuration by at least one of: a pressure differential and/or a resilient means (38).

4. An anti-syphon valve (14) according to any preceding claim, wherein the flow control member of the stabiliser (43, 29) is configured to control the flow area past the valve member (40) in the second configuration between an initial open position and a fully open position.

5. An anti-syphon valve (14) according to any preceding claim, wherein the flow control member is configured to vary the flow area past the valve member (40) between an initial open position and a fully open position.

6. An anti-syphon valve (14) according to claim 5, wherein at least a portion of the flow control member is integral with the valve member (40) and wherein the flow control member comprises at least one of: a shaped valve member (43); and a tapered portion (29) of profiled inner surface (27) proximate the valve member (40), to gradually increase flow area as the valve member (40) moves between an initial open position and a fully open position.

7. An anti-syphon valve (14) according to any preceding claim, wherein the stabiliser includes a hydraulic damper to stabilise movement of the valve member (40).

8. An anti-syphon valve according to any preceding claim, wherein the flexible membrane (50) is moveable in response to a pressure on an outlet side of the valve member (40) that is lower than an ambient pressure.

9. An anti-syphon valve (14) according to any preceding claim, further comprising a protector (52) to protect the flexible membrane (50) and, wherein one side of the flexible membrane (50) is coupled to the valve member (40) and another side of the flexible membrane (50) is located alongside at least a portion of the protector (52) and, wherein at least one spacer is located between the protector (52) and the flexible membrane (50) to substantially restrict sticking between the protector (52) and the flexible membrane (50).

10. An anti-syphon valve (14) according to claim 9, wherein the at least one spacer comprises a plurality of ribs (53), and wherein each rib has a thickness greater than that of the surrounding material.

11. An anti-syphon valve (14) according to any preceding claim, wherein at least one of the inlet (21) and the outlet (31) comprises a swivel flange (22).

12. An anti-syphon valve (14) according to any preceding claim, wherein the anti-syphon valve (14) is configured as an elbow joint.

13. An anti-syphon valve (14) according to any preceding claim, wherein the valve member (40) is movable between the first configuration and the second configuration in response to a predetermined force and, wherein at least one of the inlet (21) and the outlet (31) is connectable to an actuator (16) to actuate movement of the valve member (40) between the first and second configurations and, wherein the valve member (40) is a poppet valve.

14. A system (20) for dispensing fluid from a fluid storage facility, the system comprising:
a fluid storage facility (10);
an actuator (16) for dispensing fluid; and an anti-syphon valve (14) according to any one of claims 1 to 13, wherein the actuator (16) is arranged to cause selective movement of the valve member (40) of the anti-syphon valve (14) between the first and second configurations.

## Patentansprüche

1. Anti-Siphon-Ventil (14) zur Regelung des Durchflusses eines Fluids dorthindurch, wobei das Anti-Siphon-Ventil (14) umfasst:
ein Gehäuse (25), das einen Einlass (21) und einen Auslass (31) aufweist, und
ein Ventilelement (40), das innerhalb des Gehäuses (25) gehalten wird, wobei das Ventilelement (40) zwischen einer ersten Konfiguration, in der das Ventilelement (40) im Wesentlichen Fluidverknüpfung zwischen dem Einlass (21) und dem Auslass (31) verhindert, und einer zweiten Konfiguration beweglich ist, in der das Ventilelement (40) eine Fluidverknüpfung zwischen dem Einlass (21) und dem Auslass (31) erlaubt, und
**dadurch gekennzeichnet, dass** das Ventilelement (40) mit einer flexiblen Membran (50) gekoppelt ist, die als Reaktion auf einen Druckunterschied beweglich ist, und wobei das Ventilelement (40) einem Stabilisator (43, 29) zugeordnet ist, der ein Flussregelungselement umfasst und konfiguriert ist, um eine graduelle Bewegung des Ventilelements (40) zwischen der ersten und zweiten Konfiguration zuzulassen, um dadurch eine Bewegung des Ventilelements (40) zu stabilisieren.

2. Anti-Siphon-Ventil (14) nach Anspruch 1, wobei der Einlass (21) eine zugeordnete Achse (24) aufweist und der Auslass (31) eine zugeordnete Achse (34) aufweist, und wobei die Achsen (24, 34) des Einlasses (21) und des Auslasses (31) im Wesentlichen senkrecht zueinander sind.

3. Anti-Siphon-Ventil (14) nach Anspruch 1 oder Anspruch 2, wobei das Ventilelement (40) in der ersten Konfiguration durch mindestens eines vorgespannt ist aus: einem Druckunterschied und/ oder elastischen Mitteln (38).

4. Anti-Siphon-Ventil (14) nach einem vorstehenden Anspruch, wobei das Flussregelungselement des Stabilisators (43, 29) konfiguriert ist, um den Flussbereich nach dem Ventilelement (40) in der zweiten Konfiguration zwischen einer anfänglichen offenen Position und einer vollkommen offenen Position zu regeln.

5. Anti-Siphon-Ventil (14) nach einem vorstehenden Anspruch, wobei das Flussregelungselement konfiguriert ist, um den Flussbereich nach dem Ventilelement (40) zwischen einer anfänglichen offenen Position und einer vollkommen offenen Position zu regeln.

6. Anti-Siphon-Ventil (14) nach Anspruch 5, wobei mindestens ein Abschnitt des Flussregelungselements in einem Stück mit dem Ventilelement (40) ist und wobei das Flussregelungselement mindestens eines umfasst von: einem geformten Ventilelement (43); und einem konischen Abschnitt (29) einer profilierten Innenoberfläche (27) nahe dem Ventilelement (40), zum graduellen Steigern des Flussbereichs, wenn sich das Ventilelement (40) zwischen einer anfänglichen offenen Position und einer vollkommen offenen Position bewegt.

7. Anti-Siphon-Ventil (14) nach einem vorstehenden Anspruch, wobei der Stabilisator einen Hydraulikdämpfer beinhaltet, um eine Bewegung des Ventilelements (40) zu stabilisieren.

8. Anti-Siphon-Ventil (14) nach einem vorstehenden Anspruch, wobei die flexible Membran (50) als Reaktion auf einen Druck auf einer Auslassseite des Ventilelements (40), der niedriger als ein Umgebungsdruck ist, beweglich ist.

9. Anti-Siphon-Ventil (14) nach einem vorstehenden Anspruch, weiter einen Protektor (52) zum Schützen der flexiblen Membran (50) umfassend, und wobei eine Seite der flexiblen Membran (50) mit dem Ventilelement (40) gekoppelt ist, und eine andere Seite der flexiblen Membran (50) entlang mindestens eines Abschnitts des Protektors (52) gelegen ist, und wobei mindestens ein Abstandhalter zwischen dem Protektor (52) und der flexiblen Membran (50) gelegen ist, um im Wesentlichen ein Anhaften zwischen dem Protektor (52) und der flexiblen Membran (50) zu beschränken.

10. Anti-Siphon-Ventil (14) nach Anspruch 9, wobei der mindestens eine Abstandhalter eine Vielzahl von Rippen (53) umfasst, und wobei jede Rippe eine Dicke aufweist, die größer als jene des umgebenden Materials ist.

11. Anti-Siphon-Ventil (14) nach einem vorstehenden Anspruch, wobei mindestens einer von dem Einlass (21) und dem Auslass (31) einen Schwenkflansch (22) umfasst.

12. Anti-Siphon-Ventil (14) nach einem vorstehenden Anspruch, wobei das Anti-Siphon-Ventil (14) als ein Ellbogengelenk konfiguriert ist.

13. Anti-Siphon-Ventil (14) nach einem vorstehenden Anspruch, wobei das Ventilelement (40) zwischen der ersten Konfiguration und der zweiten Konfiguration als Reaktion auf eine vorbestimmte Kraft beweglich ist, und wobei mindestens einer von dem Einlass (21) und dem Auslass (31) mit einem Aktor (16) verbunden werden kann, um eine Bewegung des Ventilelements (40) zwischen der ersten und zweiten Konfiguration zu aktivieren und wobei das Ventilelement (40) ein Tellerventil ist.

14. System (20) zum Abgeben eines Fluids aus einer Fluidspeichereinrichtung, wobei das System umfasst:
eine Fluidspeichereinrichtung (10);
einen Aktor (16) zum Ausgeben von Fluid; und ein Anti-Siphon-Ventil (14) nach einem der Ansprüche 1 bis 13, wobei der Aktor (16) angeordnet ist, um eine selektive Bewegung des Ventilelements (40) des Anti-Siphon-Ventils (14) zwischen der ersten und zweiten Konfiguration zu bewirken.

## Revendications

1. Soupape anti-siphon (14) pour réguler l'écoulement de fluide à travers celle-ci, la soupape anti-siphon (14) comprenant :
un corps (25) présentant une entrée (21) et une sortie (31), et
un élément soupape (40) maintenu à l'intérieur du corps (25), dans laquelle l'élément soupape (40) est mobile entre une première configuration dans laquelle l'élément soupape (40) empêche sensiblement une communication fluidique entre l'entrée (21) et la sortie (31), et une seconde configuration dans laquelle l'élément soupape (40) permet une communication fluidique entre l'entrée (21) et la sortie (31), et
**caractérisée en ce que** l'élément soupape (40) est couplé à une membrane flexible (50) qui est mobile en réponse à un différentiel de pression, et dans laquelle l'élément soupape (40) est associé à un stabilisateur (43, 29) comprenant un élément de régulation d'écoulement et configuré pour permettre un déplacement progressif de l'élément soupape (40) entre les première et seconde configurations de façon à stabiliser ainsi un déplacement de l'élément soupape (40).

2. Soupape anti-siphon (14) selon la revendication 1, dans laquelle l'entrée (21) présente un axe associé (24) et la sortie (31) présente un axe associé (34), et dans laquelle les axes (24, 34) de l'entrée (21) et de la sortie (31) sont sensiblement perpendiculaires l'un à l'autre.

3. Soupape anti-siphon (14) selon la revendication 1 ou la revendication 2, dans laquelle l'élément soupape (40) est sollicité dans la première configuration par au moins l'un parmi : un différentiel de pression et/ou un moyen résilient (38).

4. Soupape anti-siphon (14) selon une quelconque revendication précédente, dans laquelle l'élément de régulation d'écoulement du stabilisateur (43, 29) est configuré pour réguler la section d'écoulement au-delà de l'élément soupape (40) dans la seconde configuration entre une position initiale ouverte et une position complètement ouverte.

5. Soupape anti-siphon (14) selon une quelconque revendication précédente, dans laquelle l'élément de régulation d'écoulement est configuré pour faire varier la section d'écoulement au-delà de l'élément soupape (40) entre une position initiale ouverte et une position complètement ouverte.

6. Soupape anti-siphon (14) selon la revendication 5, dans laquelle au moins une partie de l'élément de régulation d'écoulement est formée d'une seule pièce avec l'élément soupape (40) et dans laquelle l'élément de régulation d'écoulement comprend au moins l'un parmi : un élément soupape galbé (43) ; et une partie conique (29) d'une surface interne profilée (27) à proximité de l'élément soupape (40), de façon à agrandir progressivement une section d'écoulement à mesure que l'élément soupape (40) se déplace entre une position initiale ouverte et une position complètement ouverte.

7. Soupape anti-siphon (14) selon une quelconque revendication précédente, dans laquelle le stabilisateur inclut un amortisseur hydraulique de façon à stabiliser un déplacement de l'élément soupape (40).

8. Soupape anti-siphon selon une quelconque revendication précédente, dans laquelle la membrane flexible (50) est mobile en réponse à une pression sur un côté de sortie de l'élément soupape (40) qui est inférieure à une pression ambiante.

9. Soupape anti-siphon (14) selon une quelconque revendication précédente, comprenant en outre un protecteur (52) pour protéger la membrane flexible (50) et, dans laquelle un côté de la membrane flexible (50) est couplé à l'élément soupape (40) et un autre côté de la membrane flexible (50) est situé le long d'au moins une partie du protecteur (52) et, dans laquelle au moins une entretoise est située entre le protecteur (52) et la membrane flexible (50) de façon à limiter sensiblement un grippage entre le protecteur (52) et la membrane flexible (50).

10. Soupape anti-siphon (14) selon la revendication 9, dans laquelle ladite au moins une entretoise comprend une pluralité de nervures (53), et dans laquelle chaque nervure présente une épaisseur supérieure à celle du matériau environnant.

11. Soupape anti-siphon (14) selon une quelconque revendication précédente, dans laquelle au moins l'une parmi l'entrée (21) et la sortie (31) comprend une bride mobile (22).

12. Soupape anti-siphon (14) selon une quelconque revendication précédente, dans laquelle la soupape anti-siphon (14) est configurée comme un raccord coudé.

13. Soupape anti-siphon (14) selon une quelconque revendication précédente, dans laquelle l'élément soupape (40) est mobile entre la première configuration et la seconde configuration en réponse à une force prédéterminée et, dans laquelle au moins l'une parmi l'entrée (21) et la sortie (31) peut être raccordée à un actionneur (16) de façon à actionner un déplacement de l'élément soupape (40) entre les première et seconde configurations et, dans laquelle l'élément soupape (40) est une soupape champignon.

14. Système (20) de distribution d'un fluide à partir d'une installation de stockage de fluide, le système comprenant :
une installation de stockage de fluide (10) ;
un actionneur (16) permettant de distribuer un fluide ; et une soupape anti-siphon (14) selon l'une quelconque des revendications 1 à 13, dans lequel l'actionneur (16) est agencé de façon à déclencher un déplacement sélectif de l'élément soupape (40) de la soupape anti-siphon (14) entre les première et seconde configurations.
